Europäisches Patentamt

(19) European Patent Office

Office européen des brevets

(11) EP 0 668 185 B1

(12) EUROPÄISCHE PATENTSCHRIFT

(45) Veröffentlichungstag und Bekanntmachung des Hinweises auf die Patenterteilung:
11.06.1997 Patentblatt 1997/24

(51) Int. Cl.$^6$: **B60M 1/28**, G01C 3/10

(21) Anmeldenummer: 95101364.8

(22) Anmeldetag: 01.02.1995

(54) **Prüfverfahren und Prüfvorrichtung zur Bestimmung der Relativlage eines Fahrdrahtes zum Gleiskörper**

Test methode and device for estimating the relative position of a catenary line with regard to the railwaytrack

Méthode et dispositif de test pour déterminer la position relative d'une ligne d'alimentation par rapport à la voie ferrée

(84) Benannte Vertragsstaaten:
AT BE CH DE DK FR LI NL SE

(30) Priorität: 11.02.1994 DE 4404440

(43) Veröffentlichungstag der Anmeldung:
23.08.1995 Patentblatt 1995/34

(73) Patentinhaber: SIEMENS AKTIENGESELLSCHAFT
80333 München (DE)

(72) Erfinder:
• **Last, Manfred**
D-44628 Herne (DE)
• **Achtziger, Karlheinz, Dipl.-Ing.**
D-44627 Herne (DE)
• **Bierwald, Detlef**
D-45145 Essen (DE)

(56) Entgegenhaltungen:
DE-B- 1 262 023          GB-A- 2 191 599

## Beschreibung

Die Erfindung betrifft ein Prüfverfahren zur Bestimmung der Relativlage eines Fahrdrahtes zum Gleiskörper, wie es bei der Montage und zur Überwachung der korrekten Lage des Fahrdrahtes regelmäßig benötigt wird, sowie eine Prüfvorrichtung zur Durchführung dieses Verfahrens.

Im Bereich der elektrischen Bahntraktion erfolgt die Energieversorgung meist durch einen in Form einer Oberleitung verlegten Fahrdraht. Über einen am Fahrdraht entlang schleifenden Stromabnehmer wird die zum Antrieb des Verkehrsmittels benötigte elektrische Energie aufgenommen. Die Relativlage des Fahrdrahtes zum Gleiskörper muß möglichst genau einer zuvor berechneten Ideallinie entsprechen, um sowohl eine gute Kontaktgabe zwischen Stromabnehmer und Fahrdraht, als auch eine möglichst verschleißarme und zerstörungsfreie Nutzung des Fahrdrahtes und der Kohleschleifleiste des Stromabnehmers zu gewährleisten.

Hierzu ist es bisher bekannt, die Höhe des Fahrdrahtes über der durch die Höhe der Schienenköpfe definierten Gleiskörperebene mit Höhenmeßstangen zu ermitteln. Dies kann mit geprüften Höhenmeßstangen bei Versorgungsspannungen bis zu 1000 V = unter Spannung durchgeführt werden. Bei höheren Spannungen muß die Anlage spannungsfrei geschaltet und geerdet werden.

Darüber hinaus gibt es optische Verfahren siehe z.B. die DE-OS-1 262 023, bei denen über Peilgeräte nach dem Prinzip "Kimme und Korn" auch die Seitenverschiebung des Fahrdrahtes relativ zur Gleisachse bestimmt wird. Als Gleisachse wird die Mittelachse des von den Schienensträngen begrenzten Gleiskörpers bezeichnet.

Die Handhabung der besagten Höhenmeßstangen ist einigermaßen umständlich und aufwendig. Die optischen Verfahren sind bei schwierigen Lichtverhältnissen, wie sie bei ungünstigen Witterungsbedingungen, Dämmerung oder Dunkelheit herrschen nur bedingt einsetzbar und bieten in diesen Fällen nur eine begrenzte Genauigkeit.

Aufgabe der Erfindung ist es, ein verbessertes Prüfverfahren und eine Vorrichtung zur Durchführung dieses Prüfverfahrens zur Bestimmung der Relativlage eines Fahrdrahtes zum Gleiskörper zu schaffen. Mittels dieses Prüfverfahrens soll es möglich sein, die Höhenlage des Fahrdrahtes über der Gleiskörperebene sowie den Seitenabstand des Fahrdrahtes von der Gleisachse in einem Arbeitsgang zu bestimmen. Darüber hinaus soll das Prüfverfahren auch bei widrigen Umwelteinflüssen zuverlässig einsetzbar sein.

Ein solches Prüfverfahren wird durch die Merkmale des Anspruchs 1 beschrieben.

Dadurch, daß der Laserstrahl senkrecht nach oben auf den Fahrdraht gelenkt wird und die Lage des Fußpunktes dieses Laserstrahls zur Gleisachse zwischen den Schienen des Gleiskörpers im rechten Winkel zur Gleisachse gemessen wird, ist eine exakte Bestimmung des seitlichen Abstandes des Fahrdrahtes zur Gleisachse möglich. Der Laserstrahl kann aufgrund seiner Strahldichte und Leuchtstärke bei allen Lichtverhältnissen und schlechten Witterungsbedingungen präzise auf den Fahrdraht ausgerichtet werden.

Gemäß Anspruch 3 muß zur Bestimmung des seitlichen Abstandes des Fahrdrahtes zur Gleisachse lediglich das Lasergerät auf einer entsprechenden Vorrichtung zwischen den Schienen so weit verschoben werden, bis der Laserstrahl auf den Fahrdraht ausgerichtet ist.

Durch die Ausrichtung eines zweiten Laserstrahles auf den Fahrdraht, kann zusätzlich die Höhe des Fahrdrahtes über der Gleiskörperebene bestimmt werden. Dieses Prüfverfahren ermöglicht demnach die Ermittlung des Seitenabstandes des Fahrdrahtes von der Gleiskörperachse und der Höhe des Fahrdrahtes über der Gleiskörperebene durch die Auswertung eines einzigen Meßvorgangs. Da diese Methode berührungslos durchgeführt wird, können alle Meßvorgänge ohne Abschaltung und Erdung der Anlage vorgenommen werden

Der Anspruch 5 beschreibt eine vorteilhafte Prüfvorrichtung zur Durchführung des Prüfverfahrens. Bei dieser Vorrichtung wird nicht das Lasergerät selbst auf die Prüfschiene relativ zur Gleisachse verschoben, sondern ein den Laserstrahl rechtwinklig nach oben ablenkendes Prisma.

Mit einer gemäß Anspruch 6 ausgestalteten Prüfvorrichtung kann ebenfalls mit einem einzigen Meßvorgang der Seitenabstand des Fahrdrahtes von der Gleisachse und dessen Höhe über der Gleiskörperebene bestimmt werden.

Bei einer vorteilhaften Weiterbildung dieser Prüfvorrichtung nach Anspruch 7 wird nur ein Lasergerät benötigt, da der zur Bestimmung der Höhe des Fahrdrahtes über der Gleiskörperebene benötigte zweite Laserstrahl durch das dem Lasergerät zugeordnete Prisma erzeugt wird.

Die Prüfschiene wird an ihrem einen Ende durch eine Auflage und an ihrem anderen Ende durch einen Anschlag auf den Schienen des Gleiskörpers in einfacher Weise arretiert. Dadurch, daß die Auflage und der Anschlag auf alle gebräuchlichen Spurweiten einstellbar sind, ist die Prüfvorrichtung für unterschiedliche Bahnsysteme gleichermaßen einsetzbar.

Vorteilhafterweise ist die Prüfvorrichtung mit einer elektronischen Anzeige für die ermittelten Meßwerte ausgestattet. Neben der erleichterten Ablesbarkeit einer solchen Anzeige ergibt sich die Möglichkeit einer elektronischen Verarbeitung der ermittelten Werte. Hierzu ist eine entsprechende Schnittstelle direkt an der Prüfvorrichtung vorgesehen.

Die Erfindung wird anhand zweier in der Zeichnung dargestellter Ausführungsbeispiele näher erläutert. Es zeigen:

FIG 1    eine Prinzipskizze einer Prüfvorrichtung zur Durchführung des Prüfverfahrens,

FIG 2    ein vergrößerter Ausschnitt der FIG 1,
FIG 3    ein Prinzipskizze einer weiteren Prüfvorrichtung zur Durchführung des Prüfverfahrens,
FIG 4    ein vergrößerter Ausschnitt der FIG 3.

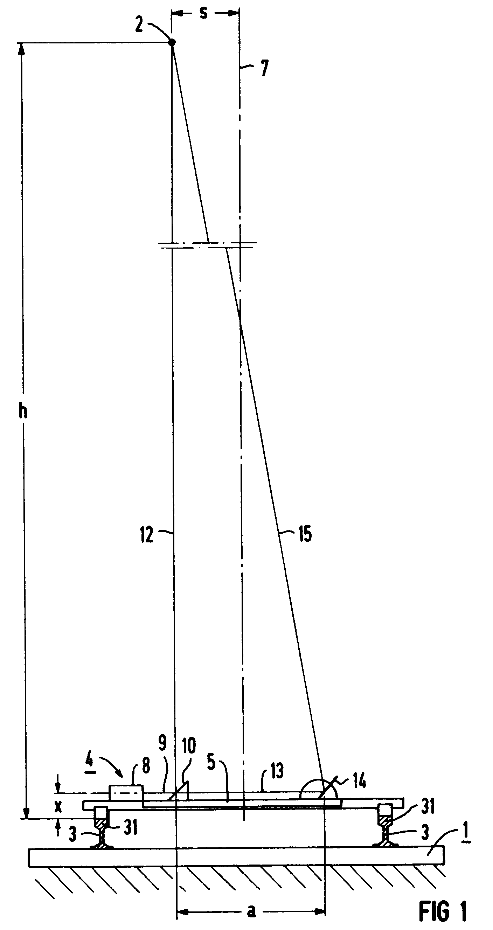

In FIG 1 ist ein elektrifizierter Bahnstreckenabschnitt im Querschnitt dargestellt. Der Streckenabschnitt umfaßt einen Gleiskörper 1, auf dem Schienen 3 angeordnet sind und dem ein Fahrdraht 2 funktionell zugeordnet ist. Zwischen den Schienen 3 des Gleiskörpers 1 ist eine Prüfvorrichtung 4 auf den Schienenköpfen 31 angeordnet. Die Prüfvorrichtung 4 weist eine Prüfschiene 5 auf, die senkrecht zu den beiden Schienen 3 angeordnet ist.

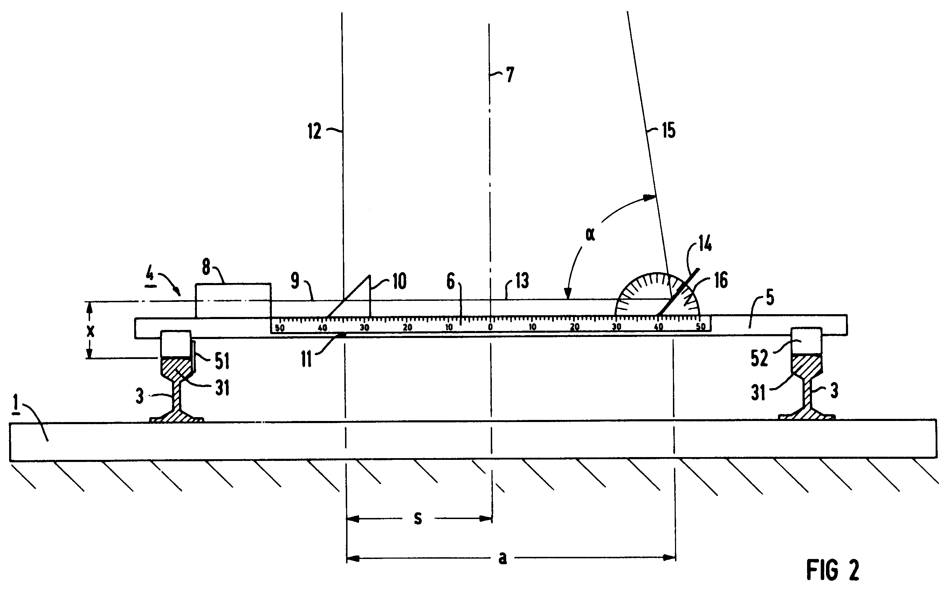

FIG 2 zeigt den Aufbau dieser Prüfschiene 5 im einzelnen. Die Prüfschiene 5 weist eine Abstandsskala 6 auf und ist ferner mit einem Anschlag 51 und einer Auflage 52, die eine Isolationsschicht umfaßt, versehen. Die Prüfschiene 5 wird auf die Schienen 3 aufgelegt, wobei der Anschlag 51 und die Auflage 52 auf die jeweilige Spurweite der Schienen 3 eingestellt werden. Die Prüfschiene 5 ist mit einer Abstandsskala 6 versehen, die den jeweiligen Seitenabstand s zu der, mit der Mittenachse des Gleiskörpers 1 identischen Gleisachse 7 anzeigt. Wenn die Prüfschiene 5 präzise positioniert ist, liegt die Null-Markierung der Abstandsskala 6 immer in der Gleisachse 7. Die Abstandsskala 6 zeigt demnach den jeweiligen Seitenabstand s von Gleisachse 7 an. In einem Endbereich der Prüfschiene 5 ist ein Lasergerät 8 angeordnet, das einen horizontalen, mit der Längsachse der Prüfschiene 5 fluchtenden Laserstrahl 9 aussendet.

Auf der Prüfschiene 5 ist ein gegenüber der Abstandsskala 6 verschiebbares Prisma 10 im Strahlgang des Laserstrahls 9 angeordnet. Ein mit dem Prisma 10 fest verbundenes Markierungselement 11 wandert bei einer Verschiebung des Prismas 10 über die Abstandsskala 6 mit.

Das Prisma 10 teilt den Laserstrahl 9 in einen ersten, senkrecht nach oben weisenden Hilfslaserstrahl 12 und einen zweiten Hilfslaserstrahl 13 auf, wobei dieser zweite Hilfslaserstrahl 13 richtungsmäßig mit dem Laserstrahl 9 übereinstimmt. Diese die Prüfschiene 5, die Abstandsskala 6, das Lasergerät 8 und das Prisma 10 umfassende Anordnung ist zu einem kompakten Prüfmodul zusammengefaßt. Die Funktion dieses Prüfmoduls wird nachfolgend beschrieben.

Das Lasergerät 8 sendet einen horizontalen Laserstrahl 9 aus, der im Falle einer korrekten Ausrichtung der Prüfschiene 5 einen rechten Winkel mit den Schienen 3 bildet. Dieser Laserstrahl 9 wird zumindest teilweise von dem Prisma 10 senkrecht nach oben abgelenkt. Der so erzeugte erste Hilfslaserstrahl 12 wird nun durch Verschiebung des Prismas 10 auf der Prüfschiene 5 gegenüber der Abstandsskala 6 auf den über dem Gleiskörper 1 angeordneten Fahrdraht 2 ausgerichtet. Die große Helligkeit des ersten Hilfslaserstrahls 12 sowie dessen für Laserstrahlen typische starke Bündelung erlauben es, auch bei ungünstigen Lichtverhältnissen den ersten Hilfslaserstrahl 12 mit hoher Genauigkeit auf den Fahrdraht 2 auszurichten. Ist der erste Hilfslaserstrahl 12 auf den Fahrdraht 2 ausgerichtet, so zeigt das Markierungselement 11 auf einen dem Seitenabstand s des Fahrdrahtes 2 von der Gleisachse 7 entsprechenden Wert der Abstandsskala 6.

Dieses Prüfmodul ist durch ein zweites Prüfmodul erweiterbar. Das zweite Prüfmodul umfaßt im wesentlichen einen Umlenkspiegel 14, der in einem festen Abstand a an das Prisma 10 angekoppelt wird. Hierbei ist der Umlenkspiegel 14 schwenkbar auf der Prüfschiene 5 befestigt. Der Umlenkspiegel 14 ist so angebracht, daß der zweite Hilfslaserstrahl 13 auf den Umlenkspiegel 14 trifft. Der Umlenkspiegel 14 lenkt den zweiten Hilfslaserstrahl 13 so um, daß ein abgelenkter Höhenmeßstrahl 15 entsteht. Dieser schräg nach oben weisende Höhenmeßstrahl 15 wird durch Verschwenken des Umlenkspiegels 14 ebenfalls auf den Fahrdraht 2 ausgerichtet.

Mit dem Umlenkspiegel 14 ist ein weiteres, in der Zeichnung nicht dargestelltes, Markierungselement verbunden, dessen Lage sich proportional der Verschwenkung des Umlenkspiegels 14 gegenüber einer mit dem Umlenkspiegel 14 und/oder der Prüfschiene 5 verbundenen Höhenskala 16 ändert. Die jeweilige Stellung des weiteren Markierungselementes gegenüber der Höhenskala 16 entspricht einem Winkel $\alpha$, der von dem auf den Umlenkspiegel 14 einstrahlenden zweiten Hilfslaserstrahl 13 und dem vom Umlenkspiegel 14 reflektierten Höhenmeßstrahl 15 gebildet wird. Der Fußpunkt des ersten und zweiten Hilfslaserstrahls 12 und 15 liegt jeweils um einen Höhenabstand x über der Gleiskörperebene. Die Beschriftung der Höhenskala 16 gibt vorteilhafterweise nicht den Winkel $\alpha$ sondern direkt die Höhe h des Fahrdrahtes 2 an. Die Höhe h entspricht der trigonometrischen Beziehung:

$$h = x + a \cdot \tan \alpha$$

Demnach wird durch die Erweiterung des ersten Prüfmoduls um ein zweites Prüfmodul zusätzlich die relative Höhe h des Fahrdrahtes 2 über der Gleiskörperebene direkt ablesbar, wobei die Lage der Gleiskörperebene durch die Höhe der Schienenköpfe 31 festgelegt ist. Der Anwender dieser aus zwei Prüfmodulen zusammensetzbaren Prüfvorrichtung 4 kann somit beide interessierende Größen, Seitenabstand s und Höhe h, direkt auf einen Blick ablesen.

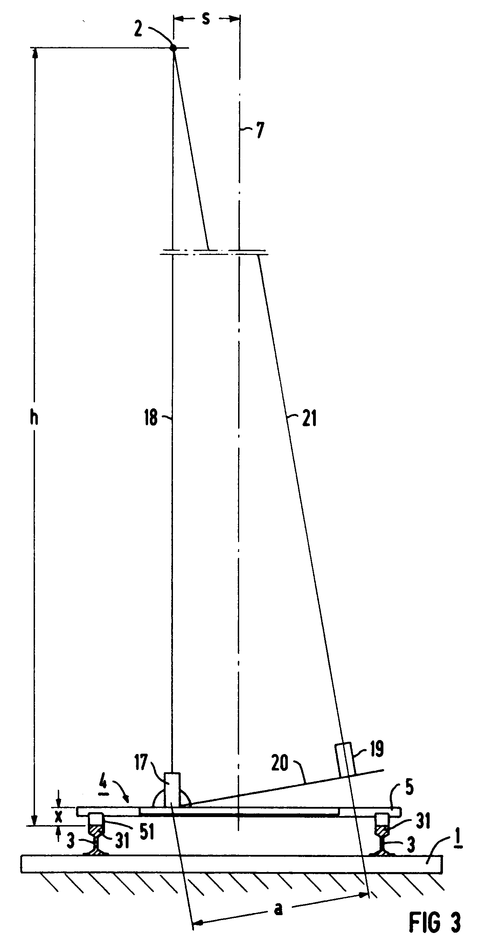

Die in FIG 3 dargestellte Prüfvorrichtung 4 ist ebenso, wie die in FIG 1 dargestellte Prüfvorrichtung 4 zwischen den Schienen 3 des Gleiskörpers 1 anzuordnen, indem die Prüfschiene 5 auf den Schienen 3 arretiert wird.

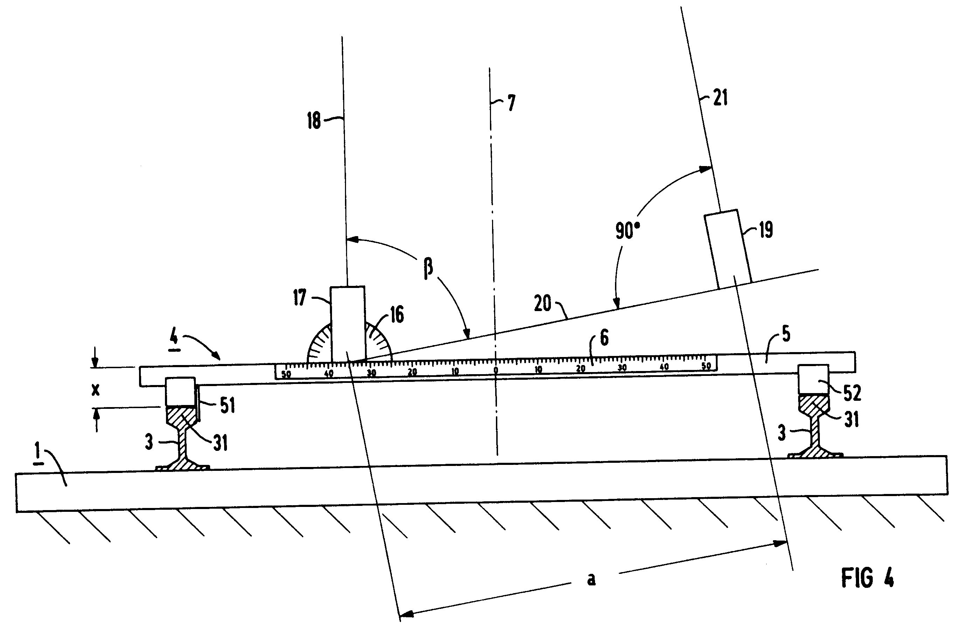

Die in FIG 3 dargestellte Prüfvorrichtung 4 wird in FIG 4 im einzelnen dargestellt. Sie weist ein erstes senkrecht nach oben strahlendes Lasergerät 17 auf, das auf einer Prüfschiene 5 verschiebbar angeordnet ist. Das Lasergerät 17 emittiert einen ersten Laserstrahl 18. Mit dem ersten Lasergerät 17 ist ein Markierungselement 11 fest verbunden. Das Markierungselement 11 dient gemeinsam mit der auf der Prüfschiene 5 aufgebrachten Abstandsskala 6 der Anzeige des Seitenabstandes s des Fahrdrahtes 2 von der Gleisachse 7 .

Mit dem ersten Lasergerät 17 ist ein zweites Lasergerät 19 in einem festen Abstand a über einen um die Strahlachse 18 des ersten Lasergerätes 17 verschwenkbaren Dreharm 20 verbunden. Der Drehpunkt des Dreharms 20 liegt um den Höhenabstand x über die Gleiskörperebene. Das zweite auf dem Dreharm 20 fest montierte Lasergerät 19 emittiert im rechten Winkel zum Dreharm 20 einen zweiten Laserstrahl 21, der durch Verschwenkung des Dreharms 20 auf den Fahrdraht 2 ausgerichtet werden kann. Eine der Verschwenkung des Dreharms 20 proportionale Anzeige erfolgt auf einer mit dem ersten Lasergerät 17 und/oder der Prüfschiene 5 fest verbundenen Höhenskala 16. Die Höhenskala 16 ist derart geeicht, daß anstelle des Verschwenkwinkels $\beta$ des Dreharms 20 direkt die Höhe h des Fahrdrahtes 2 über der Gleiskörperebene angezeigt wird. Die Umeichung der Höhenskala 16 erfolgt nach der trigonometrischen Beziehung:

$$h = x + a / \cos \beta$$

Demnach kann auch bei dieser Prüfvorrichtung 4 die Höhenlage h und der Seitenabstand s des Fahrdrahtes 2 in einem Meßvorgang ermittelt und abgelesen werden.

Eine vorteilhafte, in der Zeichnung nicht dargestellte Weiterbildung beider Prüfvorrichtungen 4 weist eine elektronische Anzeige auf. Hierzu wird beispielsweise das Prisma 10 und der Umlenkspiegels 14 jeweils mit einem Potentiometer gekoppelt. Hierdurch werden die vorgenommenen Verstellungen direkt in elektrische Größen zu überführt, die dann nach entsprechender Auswertung elektronisch angezeigt werden können. Diese angezeigten Werte sind abspeicherbar und weiterverwertbar. Zusätzlich ist ein solches Geräte mit einer Schnittstelle verbunden, die es ermöglicht, die ermittelten Werte mit einer Rechenanlage vor Ort auszuwerten und/oder einem anschließbaren Bussystem, das mit einem Zentralrechner verbunden ist, zu übermitteln.

Die in der Zeichnung dargestellten Prüfvorrichtungen erlauben es, während der Montage und im Betrieb eines Fahrdrahtes 2 die erforderlichen Kontrollmessungen zur Bestimmung der Relativlage dieses Fahrdrahtes 2 zum Gleiskörper 1 mit hoher Genauigkeit und Effektivität auszuführen. Zusätzlich zeichnen sich die dargestellten Prüfvorrichtungen 4 durch eine gesteigerte Unempfindlichkeit gegenüber äußeren Einflüssen, wie schlechten Lichtverhältnissen, aus. Somit ist ihr Einsatz jederzeit möglich. Dies ist insbesondere in Schadensfällen ein weiterer wertvoller Vorteil.

## Patentansprüche

1. Prüfverfahren, bei dem die Relativlage eines Fahrdrahtes (2) in bezug auf einen diesem Fahrdraht (2) funktionell zugeordneten Gleiskörper (1) dadurch bestimmt wird, daß dieser Fahrdraht (2) mittels eines von einem zwischen den Schienen (3) des Gleiskörpers (1) angeordneten Lasergerät (8) ausgesandten Laserstrahles (9) abgetastet wird.

2. Prüfverfahren nach Anspruch 1, bei dem der Laserstrahl (9) senkrecht nach oben auf den Fahrdraht (2) gelenkt wird und ein Seitenabstand (s) des Laserstrahls (9) von der Gleisachse (7) gemessen wird.

3. Prüfverfahren nach Anspruch 2, bei dem ein senkrecht nach oben abstrahlendes Lasergerät (8) gegenüber einer zwischen den Schienen (3) vorgesehenen Abstandsskala (6) verschiebbar angeordnet ist und im rechten Winkel zur Gleisachse (7) zwischen den Schienen (3) soweit verschoben wird bis der Laserstrahl (9) auf den Fahrdraht (2) ausgerichtet ist.

4. Prüfverfahren nach Anspruch 1, bei dem ein erster Laserstrahl (12 oder 18) senkrecht nach oben auf den Fahrdraht (2) gerichtet wird und der Seitenabstand (s) dieses ersten Laserstrahls (12 oder 18) von der Gleisachse (7) gemessen wird und ein zweiter Laserstrahl (15 oder 21) ebenfalls auf den Fahrdraht (2) gerichtet wird, wobei der zweite Laserstrahl (15 oder 21) seitlich beabstandet von dem ersten Laserstrahl (12 oder 18) ausgesendet wird.

5. Prüfvorrichtung zur Durchführung des Prüfverfahrens nach Anspruch 2, bei der dem Lasergerät (8) ein im rechten Winkel zur Gleisachse (7) auf einer Prüfschiene (5) verschiebbares Prisma (10) zugeordnet ist, durch das der vom Lasergerät (8) horizontal abgestrahlte Laserstrahl (9) senkrecht nach oben umgelenkt ist und die Prüfschiene (5) ferner eine den jeweiligen Seitenabstand (s) des Prismas (10) zur Gleisachse (7) anzeigende Abstandsskala (6) aufweist.

6. Prüfvorrichtung zur Durchführung des Prüfverfahrens nach Anspruch 4, bei der das zweite Lasergerät (19) mittels eines Dreharms (20) mit dem ersten Lasergerät (17) gekoppelt ist, der verschwenkbar um die Strahlachse des ersten Lasergerätes (17) gelagert ist und bei der eine Höhenskala (16) vorgesehen ist, deren Anzeige der Winkelstellung des Dreharms (20) entspricht.

7. Prüfvorrichtung zur Durchführung des Prüfverfahrens nach Anspruch 4, die auf einer gemeinsamen Prüfschiene (5) ein horizontal abstrahlendes Lasergerät (8) und ein Prisma (10) aufweist, das im rechten Winkel zur Gleisachse (7) auf der Prüfschiene (5) verschiebbar im Strahlgang des Lasergerätes (8) angeordnet ist und durch das der Laserstrahl (9) in einen ersten senkrecht nach oben gerichteten Hilfsstrahl (12) und in einen gegenüber dem eingestrahlten Laserstrahl (9) unveränderten oder zumindest nahezu unveränderten zweiten Hilfsstrahl (13) aufgespalten ist, wobei der zweite Hilfsstrahl (13) mittels eines verschwenkbar angeordneten Umlenkspiegels (14) auf den Fahrdraht (2) ausrichtbar ist und die Prüfschiene (5) mit einer den jeweiligen Seitenabstand (s) des Prismas (10) zur Gleisachse (7) anzeigenden Abstandsskala (6) und mit einer der Verschwenkstellung des Umlenkspiegels (14) entsprechenden Höhenskala (16) versehen ist.

8. Prüfvorrichtung nach einem der Ansprüche 5 bis 7, **dadurch gekennzeichnet,** daß die Prüfschiene (5) an ihrem einen Ende einen Anschlag (51) und an ihrem anderen Ende eine Auflage (52) aufweist, wobei der Anschlag (51) und die Auflage (52) auf die jeweilige Spurweite der Schienen (3) des Gleiskörpers (1) einstellbar sind.

9. Prüfvorrichtung nach einem der Ansprüche 5 bis 7 mit einer elektronischen Anzeige für die Höhe (h) und/oder den Seitenabstand (s) des Fahrdrahtes (2), wobei die Anzeigevorrichtung eine Schnittstelle zur Verbindung mit einem elektronischen Datenverarbeitungsgerät und/oder einem entsprechenden Bussystem aufweist.

## Claims

1. Test method in which the relative position of a contact wire (2) with respect to a track body (1) which is functionally allocated to this contact wire (2) is determined as a result of the fact that this contact wire (2) is scanned by means of a laser beam (9) emitted by a laser apparatus (8) arranged between the rails (3) of the track body (1).

2. Test method according to claim 1, in which the laser beam (9) is guided vertically upwards onto the contact wire (2), and a lateral distance (s) of the laser beam (9) from the track axis (7) is measured.

3. Test method according to claim 2, in which a laser apparatus (8) which radiates vertically upwards is arranged in a manner such that it can be shifted with respect to a distance scale (6) provided between the rails (3), and is shifted between the rails (3) at right angles to the track axis (7) for so far until the laser beam (9) is directed onto the contact wire (2).

4. Test method according to claim 1, in which a first laser beam (12 or 18) is directed vertically upwards onto the contact wire (2) and the lateral distance (s) of this first laser beam (12 or 18) from the track axis (7) is measured, and a second laser beam (15 or 21) is likewise directed onto the contact wire (2), with the second laser beam (15 or 21) being emitted in a manner such that it is laterally distanced from the first laser beam (12 or 18).

5. Test device for carrying out the test method according to claim 2, in which there is allocated to the laser apparatus (8) a prism (10), which can be shifted on a test rail (5) at right angles to the track axis (7) and by which the laser beam (9) emitted in a horizontal direction by the laser apparatus (8) is deflected vertically upwards, and the test rail (5) furthermore has a distance scale (6) which displays the respective lateral distance (s) of the prism (10) from the track axis (7).

6. Test device for carrying out the test method according to claim 4, in which the second laser apparatus (19) is coupled to the first laser apparatus (17) by means of a rotary arm (20), which is mounted in a manner such that it can be pivoted about the beam axis of the first laser apparatus (17), and in which test device there is provided a height scale (16), the display of which corresponds to the angular position of the rotary arm (20).

7. Test device for carrying out the test method according to claim 4, which test device has on a common test rail (5) a laser apparatus (8), which emits in a horizontal direction, and a prism (10), which is arranged in the beam path of the laser apparatus (8) in a manner such that it can be shifted on the test rail (5) at right angles to the track axis (7) and by which the laser beam (9) is split into a first auxiliary beam (12), which is directed vertically upwards, and a second auxiliary beam (13), which is unaltered, or at least almost unaltered, with respect to the laser beam (9) which is radiated inwards, with it being possible for the second auxiliary beam (13) to be directed onto the contact wire (2) by means of a pivotably arranged deflecting mirror (14), and the test rail (5) being provided with a distance scale (6), which displays the respective lateral distance (s) of the prism (10) from the track axis (7), and with a height scale (16), which corresponds to the pivot position of the deflecting mirror (14).

8. Test device according to one of the claims 5 to 7, characterised in that the test rail (5) has at its one end a limit stop (51), and has at its other end a support (52), with the limit stop (51) and the support (52) being adjustable to the respective track gauge of the rails (3) of the track body (1).

9. Test device according to one of the claims 5 to 7, having an electronic display for the height (h) and/or the lateral distance (s) of the contact wire (2), with the display device having an interface for connection to an electronic data processing apparatus and/or a corresponding bus system.

## Revendications

1. Procédé de contrôle, dans lequel on détermine la position relative d'un fil de contact (2) par rapport à une voie ferrée (1) affectée fonctionnellement à ce fil de contact (2) en détectant ce fil de contact (2) par un faisceau laser (9) émis par un appareil laser (8) disposé entre les rails (3) de la voie ferrée (1).

2. Procédé de contrôle selon la revendication 1, dans lequel on dirige le faisceau laser (9) verticalement vers le haut sur le fil de contact (2) et on mesure une distance latérale (s) du faisceau laser (9) par rapport à l'axe (7) de la voie.

3. Procédé de contrôle selon la revendication 2, dans lequel un appareil laser (8) émettant verticalement vers le haut est disposé de manière déplaçable par rapport à une échelle de distance (6) prévue entre les rails (3) et déplacé entre les rails (3) à angle droit par rapport à l'axe (7) de la voie jusqu'à ce que le faisceau laser (9) soit aligné sur le fil de contact (2).

4. Procédé de contrôle selon la revendication 1, dans lequel on dirige un premier faisceau laser (12 ou 18) verticalement vers le haut sur le fil de contact (2) et on mesure la distance latérale (s) de ce premier faisceau laser (12 ou 18) par rapport à l'axe (7) de la voie, et dans lequel on dirige un deuxième faisceau laser (15 ou 21) également sur le fil de contact (2), le deuxième faisceau laser (15 ou 21) étant émis à distance latérale du premier faisceau laser (12 ou 18).

5. Dispositif de contrôle pour la mise en oeuvre du procédé de contrôle selon la revendication 2, dans lequel un prisme (10) déplaçable sur un rail de contrôle (5) à angle droit par rapport à l'axe (7) de la voie est affecté à l'appareil laser (8), le faisceau laser (9) émis horizontalement par l'appareil laser (8) étant dévié par le prisme verticalement vers le haut, et dans lequel le rail de contrôle (5) comporte en outre une échelle de distance (6) indiquant la distance latérale (s) du prisme (10) par rapport à l'axe (7) de la voie.

6. Dispositif de contrôle pour la mise en oeuvre du procédé de contrôle selon la revendication 4, dans lequel le deuxième appareil laser (19) est couplé au premier appareil laser (17) au moyen d'un bras basculant (20) par rapport à l'axe de faisceau du premier appareil laser (17) et dans lequel une échelle de hauteur (16) est prévue dont l'affichage correspond à la position angulaire du bras basculant (20).

7. Dispositif de contrôle pour la mise en oeuvre du procédé de contrôle selon la revendication 4, qui comporte sur un rail de contrôle (5) commun un appareil laser (8) à émission horizontale et un prisme (10) qui est disposé de manière déplaçable sur le rail de contrôle (5), à angle droit par rapport à l'axe (7) de la voie et dans le chemin du faisceau de l'appareil laser (8) et grâce auquel le faisceau laser (9) est divisé en un premier faisceau auxiliaire (12) dirigé verticalement vers le haut et en un deuxième faisceau auxiliaire (13) inchangé ou au moins pratiquement inchangé par rapport au faisceau laser (9) émis, le deuxième faisceau auxiliaire (13) pouvant être aligné sur le fil de contact (2) au moyen d'un miroir de déviation (14) disposé de manière basculante et le rail de contrôle (5) étant pourvu d'une échelle de distance (6) affichant la distance latérale (s) du prisme (10) par rapport à l'axe (7) de la voie et d'une échelle de hauteur (16) correspondant à la position de basculement du miroir de déviation (14).

8. Dispositif de contrôle selon l'une des revendications 5 à 7, caractérisé en ce que le rail de contrôle (5) comporte à l'une de ses extrémités une butée (51) et son autre extrémité un support (52), la butée (51) et le support (52) étant ajustables à l'écartement respectif des rails (3) de la voie ferrée (1).

9. Dispositif de contrôle selon l'une des revendications 5 à 7, équipé d'un affichage électronique pour la hauteur (h) et/ou la distance latérale (s) du fil de contact (2), le dispositif d'affichage comportant une interface de connexion à une machine électronique de traitement des données et/ou à un système de bus adéquat.

EP 0 668 185 B1

FIG 1

7

FIG 2

FIG 3

FIG 4